# EUROPEAN PATENT APPLICATION

(11) **EP 4 484 191 A1**
(43) Date of publication of application: **01.01.2025**
(21) Application number: 24183703.8
(22) Date of filing: 21.06.2024
(51) Int. Cl.: B60J 7/16

(54) **SUNROOF FOR RECREATIONAL VEHICLES**

(30) Priority: 23.06.2023 IT 202300013062
(71) Applicant: Sguinzi Pietro S.p.A., 20083 Gaggiano (MI) (IT)
(72) Inventor: LOVATI, STEFANO, 20083 GAGGIANO (MILANO) (IT)
(74) Representative: Inchingalo, Simona

(57) **Abstract**

A sunroor a recreational vehicle comprising a support frame (2) adapted to be positioned at an opening (3) formed in the roof (4) of said recreational vehicle, at least one glass cover (5), connectable to said 5 support frame (2), said cover (5) comprising at least one openable portion (6), hinged to said support frame (2), an opening system (7) of said openable portion (6), comprising at least one handle (8) and two cylinders actuated by pneumatic elements (9), and a safety system (12) for preventing the glass cover (5) from falling.

## Description

### Field of application

The present invention relates to a sunroof for recreational vehicles.

### Prior art

In the particular technical field of recreational vehicles, the optimal exploitation of interior space and the careful choice in the positioning of light access points are strong points in order to offer the market a winning product that attracts the attention of users, meets their needs and satisfies their tastes.

Great attention is also given to new solutions that, in addition to the practical aspect, also improve the vehicle's appearance, both internally and externally.

Of particular interest is the design of light access points (portholes, windows and sunroofs) inside recreational vehicles to allow good interior brightness, thus reducing the use of electricity to artificially illuminate the passenger compartment during daylight hours.

At present, well-known and popular recreational vehicles on the market feature portholes, windows and sunroofs made of PMMA, a lightweight material that can be easily machined and adapted to various dimensions. Due to the very structure of the material, and the natural use of such vehicles, it is subject to deformation caused by thermal stress from prolonged exposure to the sun. Moreover, its high flexibility means that, especially on surfaces of a certain size, it is necessary to provide a plurality of handles and closing points to ensure not only the stability of the panel but also the complete closure of this access.

In addition, plastics degrade more easily with time and exposure to the elements.

Therefore, in recent years, new materials and new technical solutions are being experimented with to make portholes, windows and sunroofs for recreational vehicles that are a valid alternative to what is already known and already on the market, and that improve not only the functionality and practicality of using such windows, but also their appearance and safety. The object of the present invention is therefore to propose a sunroof for recreational vehicles that makes the opening and closing of the window more practical and functional, allows more light to enter and improves the aesthetics of the vehicle.

Further, the object of the present invention is to propose a sunroof for recreational vehicles that is safe for the user, not only during normal use but also in emergency situations, for example following accidental breakage.

These and other objects are achieved by the sunroof for recreational vehicles, which is the subject matter of the present invention, concerning a sunroof for recreational vehicles in accordance with claim 1.

The dependent claims correspond to possible embodiments of the invention.

### Summary

In particular, according to a first aspect, the present invention relates to a sunroof for a recreational vehicle comprising a support frame adapted to be positioned at an opening formed in the roof of the recreational vehicle and at least one glass cover, connectable to the support frame. The glass cover comprises at least one openable portion, hinged to the support frame, and an opening system of the openable portion.

Preferably, the glass cover extends over almost the entire width of the vehicle roof.

Advantageously, the glass cover is a double-glazing window.

The sunroof comprises a safety device for preventing the glass cover from falling. This safety device comprises supports, projecting from the support frame directed towards the centre of the opening formed in the roof, adapted to support the glass cover in case of accidental breakage and falling.

The glass cover comprises, in addition to at least one openable portion, at least one fixed glass portion.

Advantageously, the support frame comprises two or more parts and has at least one centrally hollow perimeter profile, adapted to support the openable portion, and at least one support and reinforcement portion, adapted to support at least one fixed portion. The support and reinforcement portion is made in a single piece with the perimeter profile or is connectable while it is being assembled to the perimeter profile.

In an alternative embodiment, the glass cover comprises, in addition to said at least one openable portion, at least two fixed glass portions located on the sides of the openable portion.

In this second configuration, the support frame is made in a single piece and has at least one centrally hollow perimeter profile, adapted to support the openable portion, and two support and reinforcement portions, adapted to support the lateral fixed portions, made in a single body with the perimeter profile and extending therefrom.

An alternative configuration of the support frame involves the subdivision of the frame into two or more parts: at least one centrally hollow perimeter profile, adapted to support the openable portion, and two support and reinforcement portions, adapted to support the lateral fixed portions. Advantageously, the two support and reinforcement portions can be connected to the perimeter profile while it is being assembled.

Another variant of the glass cover features two openable portions placed side by side, each one openable independently by a respective opening system.

According to this further configuration, the support frame has two centrally hollow perimeter profiles, each adapted to support a respective openable portion.

The sunroof, regardless of the configuration of the glass cover, has, as mentioned, an opening system comprising at least one handle and two cylinders actuated by pneumatic elements. Advantageously, the pneumatic cylinders are two gas springs.

### Brief description of the drawings

The present invention will be made clearer by the following detailed description, with reference to the accompanying drawings provided by way of example only, wherein:
- Figure 1 is a perspective view of a sunroof for recreational vehicles in accordance with the present invention;
- Figure 2 is a second perspective view from below of the product of the present invention;
- Figure 2A is an enlargement of a detail of Figure 2;
- Figure 3 is a second perspective view of the product covered by the present invention, in an open-window configuration;
- Figure 4 is a perspective view from below of the product covered by the present invention, again in an open-window configuration;
- Figures 5a and 5b are enlargements of the sunroof opening system of the present invention;
- Figures 6a-6h illustrate alternative forms of a glass cover forming part of the present invention.

### Description of the invention

The present invention relates to a sunroof 1 for recreational vehicles.

In the present description, the term sunroof refers to the structure that covers a hollow portion of the roof of a vehicle.

By way of example only, reference is made to semi-integrated vehicles, without wishing to limit the use of such a sunroof to other recreational vehicles. In addition, a sunroof with a curved configuration was depicted because it must necessarily follow the profile of the vehicle's roof, which, in the particular positioning point, slopes downwards. Sunroofs with a planar extension can also be provided if they are positioned, for example, on flat, non-curved surfaces.

In particular, the sunroof 1 comprises a support frame 2 adapted to be positioned at an opening 3 formed in the roof 4 of the vehicle.

At least one glass cover 5 is connected to the support frame 2, which is preferably made of aluminium. Advantageously, this glass cover 5 is a double-glazing window and comprises at least one openable portion 6, hinged to the support frame 2, by means of respective hinges 11, and an opening system 7 of the openable portion 6.

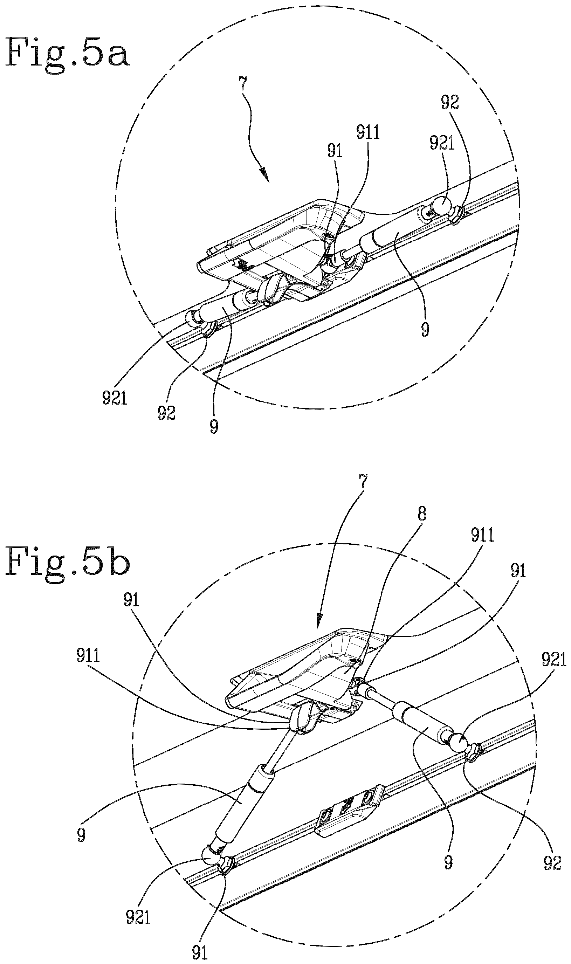

As illustrated in Figures 5a and 5b, the opening system 7 comprises a handle 8 and two cylinders 9 actuated by pneumatic elements. Specifically, the cylinders 9 are gas springs.

The opening system 7 thus comprises a one-piece handle 8 attached to the openable portion 6 made of glass, either mechanically or by gluing. The handle 8 is provided with a "trigger" slider that determines the opening and closing (resulting in a safety lock) and can be gripped and operated with one hand.

To the handle 8 itself, by means of an end 91, two gas springs 9 are anchored, which in turn are anchored, at their opposite end 92, to the support frame 2 below. In the closed position, the rotation pivots 911 of the gas springs 9 positioned on the handle 8 are in a lower position than the pivots 921 anchored to the support frame 2; therefore, the gas springs 9 work in thrust thus helping to keep the openable portion 6 compressed towards the support frame 2; once the opening system 7 is unlocked, by pushing the openable portion 6 upwards into the open position, the gas springs 9 are compressed until they reach their horizontal position, after which they return to pushing facilitating the opening of the openable portion 6 and supporting it in position.

Advantageously, the glass cover 5 extends over almost the entire width of the roof 4 of the vehicle and, preferably, it is positioned inside the opening 3 above the driver's cab. Other positions along the roof or even on the side of the vehicle are possible depending on the aesthetic appearance to be given to the vehicle and where the light is to enter the passenger compartment.

The greater extension in width of the glass cover 5 allows more light inside the vehicle.

The glass cover 5 comprises, in addition to the openable portion 6, at least one fixed glass portion 10.

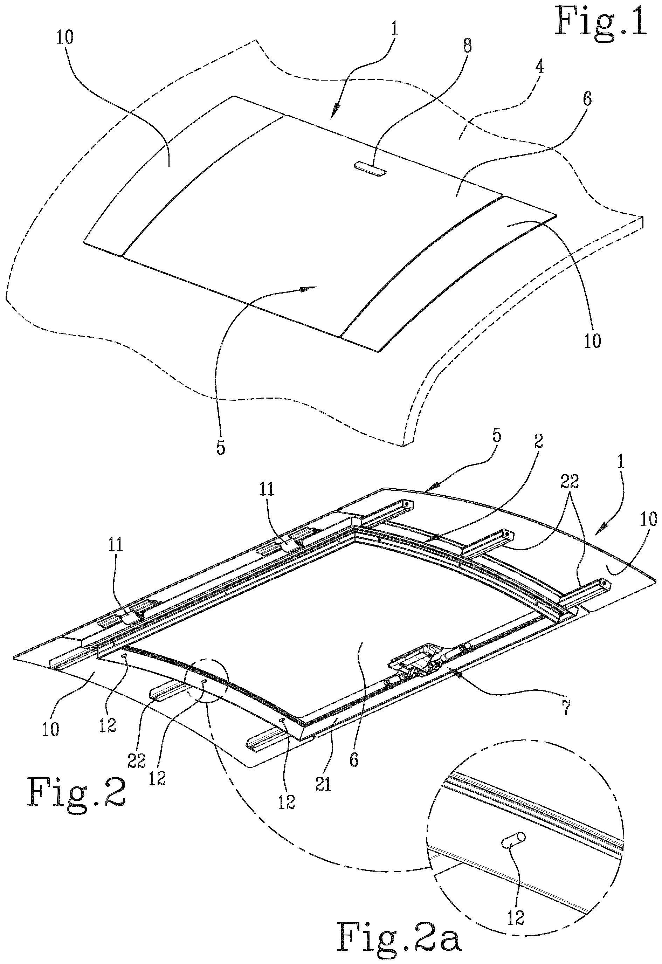

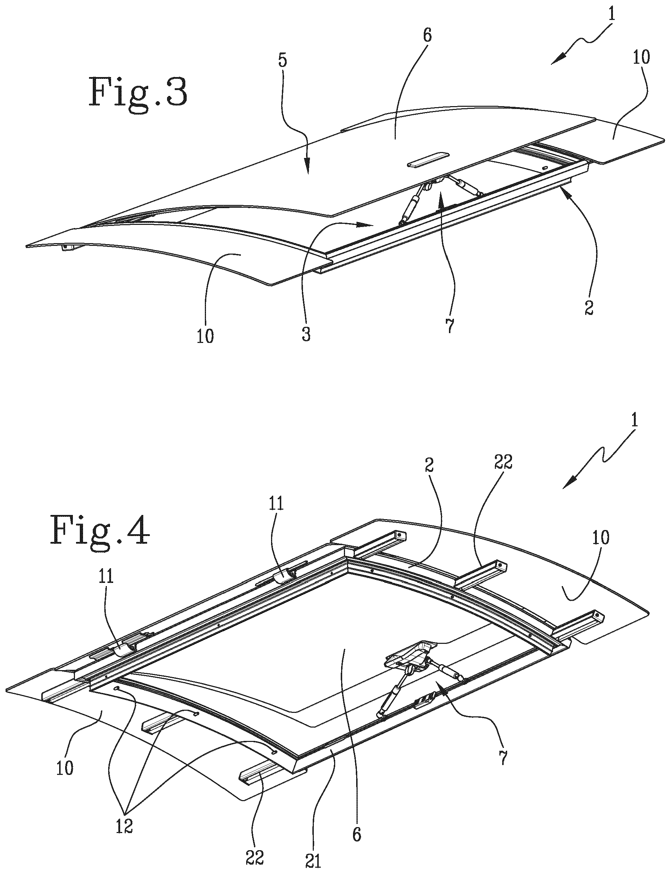

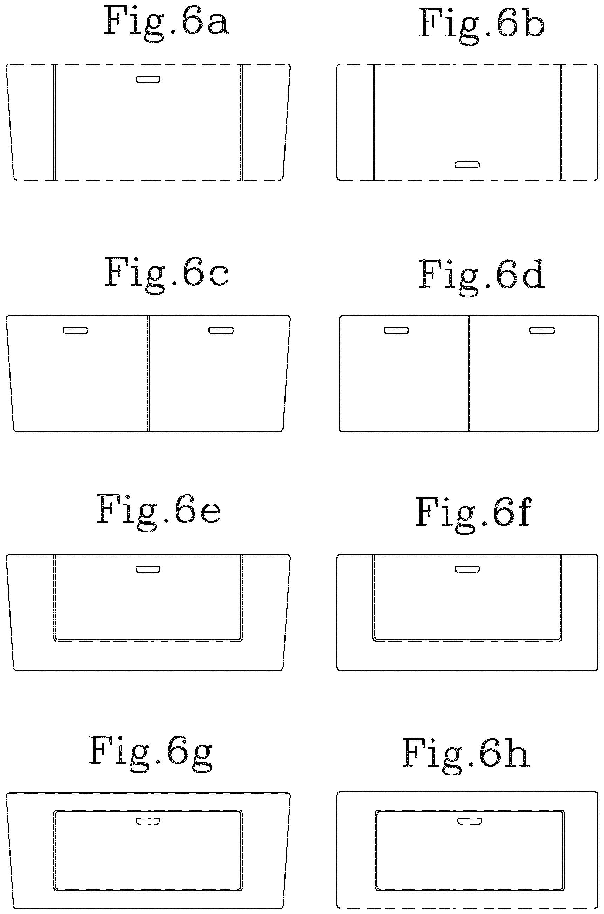

Figures 1-5 show the preferred form of the glass cover of the present invention, while possible alternatives are illustrated in Figures 6a-6h. The variants provide for a single openable portion 6 flanked on both sides or delimited, at least partially, by at least one fixed portion 10, also made of glass. The preferred configuration (Figures 1-5) has two fixed portions 10 on either side of the openable portion 6.

Another variant involves two openable portions 6 side by side, each opening independently with a respective opening system 7.

The support frame 2 preferably comprises centrally hollow perimeter profile 21, adapted to support the openable portion 6 made of glass, which is connected thereto by the mentioned hinges 11, which allow the relative rotation thereof during opening and closing.

In the case of two adjacent openable portions 6, two adjacent perimeter profiles 21, each supporting a respective openable portion 6, will be advantageously provided.

On the outer sides of the perimeter profile 21 there are additional support and reinforcement portions 22, adapted to support the lateral fixed portions 10; these additional support and reinforcement portions 22, dedicated to the fixed portions 10, can be made in a single piece with the perimeter profile 21, and project in extension from it towards the outside, or they can define a separate structure, each dedicated to a respective fixed portion 10, which is connected to the perimeter profile 21 during assembly.

As the glass cover is made of double glazing, a safety device 12 is also provided to support the glass cover 5 in the event of accidental breakage.

Compared to the known and commercially available PMMA windows or portholes, the sunroof 1 according to the present invention is made of glass, which is a more aesthetically pleasing material than PMMA but also much heavier. Since the sunroof is located in an elevated position in the vehicle, above the driver's compartment or the loft above the driver's compartment, where a sleeping place is created, additional safety devices must be provided to prevent the glass from falling disastrously onto the driver or sleeper in the event of accidental breakage. Due to the nature of the double glazing, the cover 5 does not shatter into a plurality of pieces but remains substantially compact: there is, however, the risk that the glass cover may detach from the hinges and fall downwards entirely. A safety system 12 has therefore been provided to stop and hold the glass cover 5 even in the event of accidental breakage. This safety system 12 consists of supports, projecting from the support frame 2, in particular from the perimeter profile 21, towards the centre of the opening 3 made in the roof 4, so as to perimetrically support the cover 5 in the event that it came detached from the frame 2 as a result of accidental breakage of the roof. The invention allows for better handling when opening and closing the glass openable portion, which, by the very nature of glass, is heavier and cannot be manoeuvred with the common handles currently fitted to known PMMA sunroofs, windows and portholes.

The larger glass cover allows more light into the cab, improving interior lighting and reducing electricity consumption during daylight hours.

The safety system ensures the safety of the occupants even if the glass cover is accidentally broken, preventing it from falling.

Finally, the glass material used to make the sunroof greatly enhances the appearance of the recreational vehicle, giving it a more elegant and refined look.

## Claims

1. A sunroof for a recreational vehicle comprising a support frame (2) adapted to be positioned at an opening (3) formed in the roof (4) of said recreational vehicle, at least one glass cover (5), connectable to said support frame (2), said cover (5) comprising at least one openable portion (6), hinged to said support frame (2), an opening system (7) of said openable portion (6), comprising at least one handle (8) and two cylinders actuated by pneumatic elements (9), and a safety device (12) for preventing the glass cover (5) from falling.

2. The sunroof according to claim 1, wherein said glass cover (5) extends over almost the entire width of the vehicle roof.

3. The sunroof according to any one of the preceding claims, wherein said glass cover (5) is a double-glazing window.

4. The sunroof according to any one of the preceding claims, wherein said safety device (12) comprises supports, projecting from said support frame (2) directed towards the centre of the opening (3) formed in the roof (4), adapted to support said glass cover (5) in case of damage.

5. The sunroof according to claim 1, wherein said glass cover (5) comprises, in addition to said at least one openable portion (6), at least one fixed glass portion (10).

6. The sunroof according to the preceding claim, wherein said support frame (2) comprises two or more parts and has at least one centrally hollow perimeter profile (21), adapted to support said openable portion (6), and at least one support and reinforcement portion (22), adapted to support at least one fixed portion (10); said support and reinforcement portion (22) being made in a single piece with said perimeter profile (21) or being connectable while it is being assembled to said perimeter profile (21).

7. The sunroof according to claim 1, wherein said glass cover (5) comprises, in addition to said at least one openable portion (6), at least two fixed glass portions (10) located on the sides of the openable portion (6).

8. The sunroof according to the preceding claim, wherein said support frame (2) is made in a single piece and has at least one centrally hollow perimeter profile (21), adapted to support said openable portion (6), and two support and reinforcement portions (22), adapted to support the lateral fixed portions (10), made in a single body with said perimeter profile (21) and extending therefrom.

9. The sunroof according to claim 7, wherein said support frame (2) comprises two or more parts and has at least one centrally hollow perimeter profile (21), adapted to support said openable portion (6), and two support and reinforcement portions (22), adapted to support the lateral fixed portions (10); said two support and reinforcement portions (22) being connectable to said perimeter profile (21) while it is being assembled.

10. The sunroof according to claim 1, wherein there are at least two openable portions (6) placed side by side, each one openable independently by a respective opening system (7).

11. The sunroof according to the preceding claim, wherein said support frame (2) has two centrally hollow perimeter profiles (21), each adapted to support a respective openable portion (6).

12. The sunroof according to one of the preceding claims, wherein said two cylinders actuated by pneumatic elements (9) of the opening system (7) are two gas springs.
